Europäisches Patentamt

European Patent Office

Office européen des brevets

(19)

(11) Veröffentlichungsnummer : **0 143 880**
**B1**

(12) **EUROPÄISCHE PATENTSCHRIFT**

(45) Veröffentlichungstag der Patentschrift :
01.02.89

(51) Int. Cl.⁴ : **C 08 F   2/18**, C 08 J   9/20,
**C 08 F 12/08**

(21) Anmeldenummer : 84107707.6

(22) Anmeldetag : 03.07.84

(54) Verfahren zum Steuern der Grösse der Perlen bei der Herstellung von expandierbaren Styrolpolymerisaten durch Suspensionspolymerisation.

(30) Priorität : 01.09.83 DE 3331569

(43) Veröffentlichungstag der Anmeldung :
12.06.85 Patentblatt 85/24

(45) Bekanntmachung des Hinweises auf die Patenterteilung : 01.02.89 Patentblatt 89/05

(84) Benannte Vertragsstaaten :
BE DE FR GB IT NL SE

(56) Entgegenhaltungen :
DE–A– 2 510 937
GB–A– 1 042 863
US–A– 3 222 340
US–A– 4 303 784
CHEMICAL ABSTRACTS, Band 85, Heft 18, 1. November 1976, Seite 17, Ref. Nr. 124628k; Columbus, Ohio,
US

(73) Patentinhaber : HÜLS AKTIENGESELLSCHAFT
- RSP Patente / PB 15 - Postfach 13 20
D-4370 Marl 1 (DE)

(72) Erfinder : Rigler, Josef Karl, Dr.
Helgolandstrasse 16
D-4350 Recklinghausen (DE)
Erfinder : Reese, Dirk, Dr.
Stargarder Strasse 32
D-4370 Marl (DE)
Erfinder : Leithäuser, Horst, Dr.
Langehegge 151
D-4370 Marl (DE)

**Beschreibung**

Expandierbare oder verschäumbare Styrolpolymerisate werden im wesentlichen nach dem Verfahren der sogenannten Perlpolymerisation oder Suspensionspolymerisation in wäßriger Phase erhalten. Als Suspensionsstabilisatoren werden heute üblicherweise wasserlösliche organische Polymere verwendet, die als Schutzkolloide bezeichnet werden. Auch feinteilige Pulver wie z. B. Calcium- oder Bariumsulfat oder Calciumphosphat können zur Stabilisierung der Suspensionströpfchen verwendet werden. Derartige Stabilisatorsysteme werden als Pickering-Stabilisatoren bezeichnet. Eine Aufstellung von technisch eingesetzten Schutzkolloiden ist z. B. in dem Artikel von Trommsdorf und Münster in « Schildknecht : Polymer Processes Vol. 29, Seite 119 bis 120 zu finden.

Der Wahl von geeigneten Schutzkolloiden kommt aus folgenden Gründen eine wesentliche Bedeutung zu :

1. Einstellung enger Kornverteilungen mit definierter Größe

Verschäumbare Styrolpolymerisate werden je nach Perlgröße verschiedenen Einsatzzwecken zugeführt : grobe Perlen (2,5 bis 0,8 mm) werden für die Herstellung von Isolierplatten eingesetzt, feinere Fraktionen (0,8 bis 0,4 mm Durchmesser) werden zur Herstellung von Verpackungsmaterial verwendet. Es ist daher notwendig, daß Perlen im jeweils gewünschten Korngrößenbereich in ausreichender Menge, d. h. in hoher Ausbeute, anfallen.

Dabei soll der Anfall an Über- oder Unterkorn möglichst gering sein.

2. Niedriger Innenwassergehalt der Perlen

Bei der üblichen Suspensionspolymerisation wird bekanntlich stets eine gewisse Menge Wasser in die Perlen eingeschlossen. Polymerisate mit einem niedrigen Gehalt an eingeschlossenem Wasser weisen im aufgeschäumten Zustand eine gleichmäßige Schaumstruktur auf, die die Wärmeisolierfähigkeit der Schaumstoffplatten positiv beeinflußt. Ein möglichst niedriger Gehalt an eingeschlossenem Wasser, sogenannten Innenwasser, ist daher anzustreben.

3. Kugelförmige Gestalt der Perlen

Bei der Suspensionspolymerisation von treibmittelfreiem Styrol werden, wegen der besseren Verarbeitbarkeit, deformierte Perlen angestrebt. Bei der Herstellung expandierbarer Styrolpolymerisate sollten die Perlen jedoch möglichst kugelförmige Gestalt besitzen.

4. Ausreichende Stabilität der Suspension über den gesamten Polymerisationszyklus

Die Suspension zur Herstellung von expandierbaren Styrolpolymerisaten ist noch labiler als die von treibmittelfreien Styrolpolymerisaten. Bei den heute üblichen Reaktorgrößen bis zu 100 m³ stellt der Verlust eines Ansatzes daher einen erheblichen Schaden dar. Es muß also gewährleistet sein, daß bei Störfällen die Phasentrennung so langsam vor sich geht, daß genügend Zeit bleibt, einen Polymerisations-inhibitor zuzusetzen.

Alle diese Forderungen werden von keinem bis heute bekannten Suspensionssystem gleichzeitig erfüllt. Es hat zwar nicht an Versuchen gefehlt, einen gangbaren Weg zu finden, um alle vier Anforderungen gleichzeitig zu erfüllen. Wie der bekanntgewordene Stand der Technik zeigt, hatten die Bemühungen jedoch keinen Erfolg.

In der DE-A-25 48 524 wird ein Verfahren beschrieben, wonach Suspensionsstabilisatoren eingesetzt werden, die durch radikalische Polymerisation von Styrol in Gegenwart von Polyvinylpyrrolidon hergestellt wurden.

Die DE-B2-25 10 937 beschreibt eine Methode, bei der das System anfangs im Zustand geringer Viskosität mit Tricalciumphosphat schwach stabilisiert wird, einige Stunden später erfolgt ein Nachstabilisieren mit einer wäßrigen Lösung von Polyvinylpyrrolidon.

Nach beiden Verfahren sollen Styrolpolymerisate mit geringem Innenwassergehalt erzeugt werden können. Diese Verfahren haben jedoch den Nachteil, daß die Korngröße des Polymerisates durch den Zugabezeitpunkt des organischen Schutzkolloides bestimmt wird.

Die genaue Bestimmung des Polymerisationsumsatzes bei heterogenen Gemengen, wie sie bei der Suspensionspolymerisation vorliegen, ist schwierig. Eine genaue Kenntnis des Umsatzes ist für die reproduzierbare Einstellung der Kornspektren jedoch notwendig, da die Perlgröße von der jeweiligen Viskosität der polymerisierenden Phase abhängt, bei der das Schutzkolloid zugegeben wird. Außerdem ist das polymerisierende System etwa 2 Stunden in einem unsicheren Betriebszustand, was speziell beim Einsatz von Großreaktoren besonders nachteilig ist. Ein Störfall, z. B. ein Rührerausfall, kann besonders zu Anfang der Polymerisation, wenn die Hauptmenge an Styrol noch vorhanden ist, zu einer Zerstörung des Reaktors führen.

In der DE-B-20 49 291 wird vorgeschlagen, zwei Schutzkolloide, nämlich Polyvinylalkohol mit unterschiedlichem Hydroxilierungsgrad, einzusetzen, um einheitlich große runde Perlen zu erhalten. Wie die angegebenen Beispiele zeigen, muß dabei das Verhältnis von Styrol zu Wasser so ungünstig gewählt werden, daß das Verfahren unwirtschaftlich ist. Das Verfahren kann nicht dazu beitragen, die Korngröße der Perlen gezielt zu steuern.

Wie bereits eingangs erwähnt wurde, werden auch wasserunlösliche anorganische Pulver als Suspensionsstabilisatoren eingesetzt. Die Verwendung von Calciumphosphaten ist am gebräuchlisten. Diese anorganischen Verbindungen werden in der Regel in Kombination mit kleineren Mengen an Emulgatoren oder Tensiden eingesetzt (Houben-Weyl, Methoden der organischen Chemie, 4. Auflage, Band XIV, Teil 1, Makromolekulare Stoffe, Seite 425). Die Anwendung dieser Systeme ist im Vergleich zu organischen Schutzkolloiden aber eingeschränkt, da eine reproduzierbare Handhabung und ein störungsfreier Verlauf der Suspensionspolymerisation nur in einem engen Bereich möglich ist. Auf Seite 422, letzter Absatz, Zeilen 6 bis 8 dieser Literaturstelle wird hierzu aufgeführt : « Es lassen sich kaum Bedingungen angeben, unter denen ein pulverförmiges Dispergiermittel einer breiteren Anwendung fähig wäre. Bei der Kombination von anorganischen Verbindungen mit Tensiden muß die optimale Dosierung exakt eingehalten werden, da sowohl Unterdosierung als auch Überdosierung des Tensides eine Koagulation des Ansatzes zur Folge haben. »

Aus der französischen Patentschrift 20 79 991 ist auch bekannt, sowohl durch die Menge des Suspensionsmittels (Schutzkolloids) oder durch Variieren des Phasenverhältnisses wäßriger zu organischer Phase oder auch durch Verwenden einer Mischung aus organischem Schutzkolloid und anorganischem Suspensionsstabilisator die Form der Perlen zu verändern. Nach dieser Arbeitsweise erhält man notwendigerweise keine kugelförmigen Perlen, auch keine Perlen mit niedrigem Innenwassergehalt, weil das Suspensionsmittel nicht vor der Polymerisation der wäßrigen Phase zugesetzt wird. Beim Zugeben des Suspensionsmittels zu Beginn der Polymerisation läßt sich die Korngröße nicht reproduzierbar einstellen.

Auch das ähnliche Verfahren der US-A-3 222 343 erfüllt nicht die geforderten Bedingungen.

Aus der US-A-3 222 340 ist ein Verfahren der Suspensionspolymerisation bekannt, welches in Gegenwart von Calciumphosphat als Suspensionsstabilisator arbeitet. Zur Verbesserung der Wirksamkeit des Phosphats werden relativ größere Mengen eines Komplexbildners zugesetzt. Eine Lehre zum Steuern der Perlengröße von verschäumbarem Polystyrol bei der Suspensionspolymerisation in Gegenwart von organischen Schutzkolloiden kann daraus nicht nahegelegt werden.

Der Erfindung liegt die Aufgabe zugrunde, ein Verfahren zur Korngrößensteuerung bei der Suspensionspolymerisation von Styrol zu entwickeln, bei dem die Suspension über den gesamten Polymerisationszyklus stabil ist, expandierbare Perlen mit niedrigem Innenwassergehalt und kugelförmiger Gestalt ergibt und nach Wunsch feine oder grobe Perlfraktionen innerhalb der Korngröße von 0,41 bis 2,5 mm in hoher Ausbeute liefert.

Diese Aufgabe wird erfindungsgemäß gelöst, indem man in dem Polymerisationsansatz, bezogen auf die wäßrige Phase, eine Konzentration von Calcium- oder Aluminiumionen oder Ionen der Metalle der I. oder II. oder VI. bis VIII. Nebengruppe des Periodensystems der Elemente von $1.10^{-5}$ bis $3.10^{-2}$ Masseprozent einstellt, wobei die Metallionen in wasserlöslichen, anorganischen Salzen als Kationen in der höheren Oxidationsstufe vorliegen. Vorzugsweise beträgt die Konzentration der Metallionen, bezogen auf die wäßrige Phase, $1.10^{-4}$ bis $1.10^{-2}$ Masseprozent.

Durch Variation der Menge des Zusatzes dieser Ionen kann das Kornspektrum der blähfähigen Styrolpolymerisate problemlos in dem gewünschten Bereich eingestellt werden. Insbesondere ist hervorzuheben, daß durch den Ionenzusatz der Gehalt an eingeschlossenem Wasser in den verschäumbaren Perlen nicht erhöht wird.

Geeignete wasserlösliche, anorganische Salze, aus denen die Ionen stammen, sind beispielsweise Calciumchlorid, Eisen(III) chlorid, Manganchlorid, Eisen(III) nitrat, Eisen(III) sulfat, Kupfernitrat, Zinksulfat, Cobalt(III) chlorid. Vorzugsweise wird Eisen(III) chlorid, Calciumchlorid oder Manganchlorid eingesetzt.

Wesentlich ist, daß die zugrunde liegenden Salze wasserlöslich sind. So sind die als Suspensionsstabilisatoren, gegebenenfalls vorhandenen Salze Tricalciumphosphat oder Calciumcarbonat wegen ihrer Wasserunlöslichkeit nicht brauchbar. Auch Eisenoxid ($Fe_2O_3$) gibt, in großen Mengen eingesetzt, z. B. in Mengen von 0,1 Masseprozent, bezogen auf die wäßrige Phase, nicht genügend Ionen an die wäßrige Phase ab. Das Anion der verwendeten Salze darf die Polymerisation nicht stören. Das Kation soll, wegen der möglichen Wechselwirkung mit den im System vorhandenen Peroxiden in der höchsten Oxidationsstufe vorliegen, demnach werden die entsprechenden Salze des dreiwertigen Eisens bevorzugt eingesetzt.

Nach einem bevorzugten Verfahren werden der wäßrigen Phase, welche das Schutzkolloid und gegebenenfalls zusätzlich einen wasserunlöslichen Suspensionsstabilisator enthält, zunächst geringe Mengen eines Komplexbildners zugesetzt, der zunächst alle eingebrachten gegebenenfalls störenden Fremdionen entfernt. Anschließend stellt man die gewünschte Menge an Ionen durch Zusatz der Salze gemäß der Erfindung ein.

Geeignete Komplexbildner sind zum Beispiel Aminopolycarbonsäuren, wie Ethylendiamintetraessigsäure oder Nitrilotriessigsäure.

Die Menge des Komplexbildners richtet sich nach der Menge der eingebrachten, wasserlöslichen

3

Fremdionen und kann bis zu 0,5 Gewichtsprozent, bezogen auf die wäßrige Phase, betragen, ohne die Polymerisation zu stören ; im allgemeinen genügen 0,0001 bis 0,05, vorzugsweise 0,0005 bis 0,02 Gewichtsprozent.

Bei dem Verfahren der Erfindung werden bevorzugt Hydroxiethylcellulose oder Polyvinylpyrrolidon, also wasserlösliche Schutzkolloide eingesetzt. Auch andere Schutzkolloide sind einsetzbar, doch sollte durch den Zusatz des Schutzkolloids die Grenzflächenspannung zwischen Styrol und wäßriger Phase nicht unter 18 N/mm² absinken. Die Grenzflächenspannung Styrol/Wasser liegt bei 32 N/mm². Der Einsatz von Schutzkolloiden, deren Zusatz die Grenzflächenspannung zwischen Styrol und Wasser nicht unter 18 N/mm² senkt, hat den Vorteil, daß diese bereits vor Beginn der Polymerisation zugegeben werden können. Damit ist eine ausreichende Stabilisierung des Polymerisationsansatzes ständig gewährleistet. Es entstehen in jedem Falle kugelrunde Perlen.

Die Schutzkolloide werden in Konzentrationen zwischen 0,01 und 0,3 Gew.-%, bezogen auf die Menge an Wasser, insbesondere in Konzentrationen zwischen 0,05 und 0,15 Gew.-% eingesetzt. Diese Substanzen sollen im angegebenen Konzentrationsbereich bei den beim Polymerisationsprozeß herrschenden Temperaturen zwischen 25 und 125 °C in Wasser klar und vollständig löslich sein.

Vorteilhaft wird, zusätzlich zu dem organischen Schutzkolloid, ein in Wasser unlösliches, anorganisches Pulver zugesetzt. Geeignete Pulver sind z. B. feinteilige Tricalciumphosphate oder Bariumphosphat. Das Gewichtsverhältnis von organischem Schutzkolloid und anorganischem Pulver liegt im Bereich von 1 : 1 bis 1 : 5, insbesondere von 1 : 2 und 1 : 4.

Die organischen Schutzkolloide werden zusammen mit den übrigen Komponenten des Stabilisierungssystems vor Beginn der Polymerisation in die wäßrige Phase gegeben. Unter Rühren wird die organische Phase zugesetzt und anschließend aufgeheizt. Das System ist daher zu jedem Zeitpunkt der Polymerisation ausreichend stabil. Sollte der Rührer ausfallen, tritt die Trennung der wäßrigen und organischen Phase so langsam ein, daß genügend Zeit bleibt, einen Polymerisations-inhibitor zuzusetzen. Es entstehen Styrolpolymerisate, deren Innenwassergehalt außerordentlich niedrig ist. Er liegt zwischen 0,3 und 1,0 Gew.-%.

Bei dem Verfahren der Erfindung liegt das Gewichtsverhältnis von organischer zu wäßriger Phase im Bereich von 0,9 : 1 bis 1,25 : 1, bevorzugt im Bereich um 1 : 1.

Ausgangsstoffe für die Herstellung der expandierbaren Styrolpolymerisate sind Styrol und Monomerengemische, die mindestens 50 Gew.-% Styrol enthalten und zusätzlich ein mit Styrol copolymerisierbares Monomeres, z. B. α-Methylstyrol, p-Methylstyrol, kernhalogenierte Styrole, Acrylnitril, Ester der Acryl- oder Methacrylsäure von Alkoholen mit 1 bis 8 Kohlenstoffatomen, N-Vinylverbindungen, wie N-Vinylcarbazol oder auch geringe Mengen Butadien oder Divinylbenzol enthalten.

Die Polymerisation wird nach dem an sich bekannten Perlpolymerisationsverfahren bei Temperaturen von 80 bis 130 °C durchgeführt. Sie wird in üblicher Weise mittels einer oder mehrerer radikalbildender Substanzen initiiert, wobei die üblichen Mengen 0,2 bis 1, insbesondere 0,3 bis 0,6 Gewichtsprozent, bezogen auf die organische Phase verwendet werden ; t-Butylperbenzoat, t-Butylperisononanat, Di-t-butylperoxid, Dibenzoylperoxid oder Mischungen derselben seien beispielsweise genannt. Die Styrolpolymerisate können außerdem organische Halogenverbindungen als Flammschutzmittel enthalten, wie die bromierten Oligomeren des Butadien oder des Isopren. Als typische Vertreter seien genannt : 1,2,5,6-Tetrabromcyclodecan, 1,2,5,6,9,10-Hexabromcyclododecan, bromiertes Polybutadien mit einem Polymerisationsgrad von z. B. bis 15, 1-(α,β-Dibromethyl)-3,4-dibromcyclohexan. Es kann vorteilhaft sein, synergistisch wirkende Substanzen, wie Di-t-butylperoxid, Dicumylperoxid, Poly-p-diisopropylbenzol etc. zuzusetzen.

Als Treibmittel werden für das erfindungsgemäße Verfahren flüssige oder gasförmige organische Verbindungen verwendet, die das Styrolpolymerisat nicht lösen und deren Siedepunkt unterhalb des Erweichungspunktes des Polymerisates liegt, z. B. aliphatische Kohlenwasserstoffe, wie Propan, Butan, Pentan, Hexan, Cyclohexan oder Halogenkohlenwasserstoffe, wie Methylchlorid, Dichloriddifluormethan, Trichlormonoflurmethan oder 1,2,2-Trifluor-, 1,1,2-Trichlorethan. Auch Mischungen der Treibmittel können verwendet werden. Die Treibmittel werden üblicherweise in Mengen von 2 bis 20 Gew.-%, vorzugsweise 3 bis 12 Gew.-%, bezogen auf die Monomeren, verwendet.

Die expandierbaren Styrolpolymerisate können außerdem Zusatzstoffe, wie Farbstoffe, Füllstoffe und Regulierungsmittel für die Schaumporosität, wie Epoxialkane, enthalten. Die expandierbaren Styrolpolymerisate liegen nach der Herstellung in Kugelform vor und haben im allgemeinen einen Teilchendurchmesser von 0,3 bis 3 mm, vorzugsweise 0,4 bis 2,5 mm. Sie können nach den üblichen Verfahren in vorgeschäumtem Zustand durch Erhitzen in Formen, welche nicht gasdicht schließen, weiter aufgeschäumt und zu Schaumstoffkörpern versintert werden, die in ihren Ausmaßen dem Innenhohlraum der verwendeten Form entsprechen.

## 1. Beispiele

### 1.1. Polymerisation

In einem geeigneten Pulvermischer werden für je 100 Gewichtsteile Wasser die in Tabelle 1 angegebenen Mengen an organischem Schutzkolloid, feinteiligem Tricalciumphosphat sowie $1.10^{-2}$

Gewichtsteile Ethylendiamintetraessigsäure abgemischt. Dieses Pulvergemisch wird dann in einen Rührbehälter gegeben, in dem 100 Gew.-Teile vollentsalztes Wasser vorgelegt werden. Fünf Minuten vor Zugabe der organischen Phase wird die genau gewogene Menge an anorganischem Salz, wie in Tabelle 1 vermerkt, in die wäßrige Phase zugegeben (E 1 bis E 8) bzw. ohne Ionenzusatz wie folgt weitergearbeitet (E 9 und E 10).

Danach werden unter Rühren 100 Teile Styrol zugegeben in dem 0,30 Teile Dibenzoylperoxid und 0,15 Teile 6-Butylperbenzoat gelöst sind. Diese Mischung wird 4 Stunden bei 90 °C und 6 Stunden bei 115 °C unter Rühren polymerisiert.

Drei Stunden nach Erreichen von 90 °C werden 7 Teile eines Gemisches aus normal- und iso-Pentan zugegeben. Nach Beendigung der Polymerisation wird der Rührbehälter entleert und die Polymerisatteilchen von Außenwasser befreit.

Das Innenwasser wird folgendermaßen bestimmt : Eine Probe des expandierbaren Polystyrols wurde zur Beseitigung von Außenwasserspuren zwei Minuten mit Methanol behandelt, dann auf einer Nutsche abgesaugt und fünf Minuten mit Luft von 20 °C im Gegenstrom beblasen. Die so aufbereitete Probe wurde dann nach der Methode von « Karl-Fischer » titriert.

(Siehe Tabelle 1 Seite 6 f.)

Tabelle 1

| Beispiel Nr. | Molgew. HEC l(g/ml) | Gewichtst./100 Gew.T. Wasser | | | Ausbeute ***) | Kornspektrum % mm | | | | | | |
|---|---|---|---|---|---|---|---|---|---|---|---|---|
| | | HEC *) | TCP **) | $.10^{-4}$ $Fe^{3+}$ Innenwasser | | >2,5 | 2,0 | 1,12 | 0,9 | 0,63 | 0,4 | <0,41 |
| E 1 | 620 | 0,14 | 0,25 | 1,4 | 0,79 | 99,9 | 0,1 | 10,4 | 22,4 | 48,5 | 16,2 | 2,3 | 0,1 |
| E 2 | 620 | 0,14 | 0,25 | 1,8 | 0,65 | 99,6 | 0,2 | 48,2 | 32,5 | 16,5 | 2,0 | 0,4 | 0,2 |
| E 3 | 620 | 0,14 | 0,25 | 1,1 | 0,48 | 99,2 | - | - | 8,2 | 48,5 | 39,2 | 3,3 | 0,8 |
| E 9 | 620 | 0,12 | 0,25 | - | 0,98 | 94,9 | 4,3 | 34,3 | 41,5 | 14,5 | 5,2 | 1,4 | 0,8 |
| E 4 | 476 | 0,17 | 0,30 | 1,4 | 0,43 | 99,0 | 0,4 | 32,5 | 41,2 | 18,4 | 4,8 | 1,7 | 1,0 |
| E 5 | 476 | 0,17 | 0,30 | 1,0 $Mn^{2+}$ | 0,64 | 99,8 | - | - | 0,2 | 18,4 | 54,4 | 26,8 | 0,2 |
| E 6 | 476 | 0,10 | 0,30 | 20 $Ca^{2+}$ | | 96,4 | 0,8 | 3,6 | 11,3 | 11,4 | 38,1 | 32,0 | 2,8 |
| E 7 | 476 | 0,10 | 0,30 | 70 $Fe^{3+}$ | | 94,6 | 4,4 | 4,8 | 25,5 | 36,8 | 23,3 | 4,2 | 1,0 |
| E 8 | 476 | 0,10 | 0,30 | 20 | | 91,8 | 6,3 | 9,7 | 43,2 | 24,5 | 11,2 | 3,2 | 1,9 |
| E 10 | 476 | 0,10 | 0,30 | - | | 95,6 | 1,0 | 4,4 | 9,1 | 8,5 | 31,6 | 41,0 | 4,4 |

*) HEC = Hydroxiethylcellulose
**) Tricalciumphosphat
***) Ausbeute = Gewichtsprozent Perlen im Korngrößenbereich von 2,5 bis 0,41 mm

Als Einsensalz wurde Eisen(III) chlorid. $6H_2O$, als Mangansalz $MnCl_2 \cdot 4H_2O$ und als Calciumsalz $CaCl_2$ verwendet.

$l = ((\eta/\eta_0)-1)$ 1/C [g/ml] gemessen in 0,2 %iger wäßriger Lösung bei 25 °C (in Anlehnung an DIN 53728).

Tabelle 2

| Nr. | Mol-gew. HEC (g/ml) | Gew.Tl./100 Gew.Tl. Wasser | | Ionenzusatz | | Komplex-bildner $\cdot 10^{-4}$ | Innen-wasser | Aus-beute | $> 2,5$ | $2,0$ | $1,12$ | $0,9$ | $0,63$ | $0,4$ | $< 0,4$ |
| | | HEC | TCP | Art | $\cdot 10^{-4}$ | | | | | | | | | | |
|---|---|---|---|---|---|---|---|---|---|---|---|---|---|---|---|
| E 13 | 476 | 0,10 | 0,30 | $Mn^{2+}$ | 20 | – | | 95,1 | 3,7 | 5.4 | 26,5 | 35,4 | 23,7 | 4,1 | 1,2 |
| E 14 | 476 | 0,10 | 0,30 | $Ca^{2+}$ | 70 | – | | 87,3 | 12,1 | 29,5 | 46,7 | 8,1 | 2,3 | 0,7 | 0,6 |
| E 11 | 620 | 0,07 | – | $Fe^{3+}$ | 2 | 10 | | 86,5 | 12,4 | 13,5 | 36,0 | 23,4 | 10,9 | 2,7 | 1,1 |
| E 12 | 620 | 0,07 | – | – | – | 10 | | 91,3 | 4,8 | 7,2 | 29,0 | 21,4 | 14,3 | 19,4 | 3,9 |

In Tabelle 2 sind Beispiele enthalten, bei denen einmal in Abwesenheit von Tricalciumphosphat gearbeitet wird, wobei jedoch ebenfalls die bevorzugte Methode angewendet wurde, vor dem Dosieren der Ionen einen Komplexbildner der wäßrigen Phase zuzusetzen (E 11 und E 12).

Bei den Beispielen (E 13 und E 14) wurde analog ohne vorherigen Zusatz an Komplexbildnern gearbeitet.

Bei den Beispielen E 6. E 7, E 8, E 10 bis E 14 wurde in kleineren Kesseln gearbeitet.

**Patentansprüche**

1. Verfahren zum Steuern der Größe der Perlen bei der Herstellung von expandierbaren Styrolpolymerisaten durch Polymerisation von Styrol oder im Gemisch mit Comonomeren in wäßriger Suspension in Gegenwart von organischen Schutzkolloiden und radikalbildenden Initiatoren sowie Treibmitteln, dadurch gekennzeichnet, daß man, bezogen auf die wäßrige Phase, eine Konzentration von Calcium- oder Aluminiumionen oder Ionen der Metalle der I. oder II. oder VI. bis VIII. Nebengruppe des Periodensystems der Elemente von $1.10^{-5}$ bis $3.10^{-2}$ Masseprozent einstellt, wobei die Metallionen in wasserlöslichen, anorganischen Salzen als Kationen in der höheren Oxidationsstufe vorliegen.

2. Verfahren nach Anspruch 1, dadurch gekennzeichnet, daß die Konzentration der Metallionen, bezogen auf die wäßrige Phase, $1.10^{-4}$ bis $1.10^{-2}$ Masseprozent beträgt.

3. Verfahren nach den Ansprüchen 1 und 2, dadurch gekennzeichnet, daß man als wasserlösliches anorganisches Metallsalz Eisen(III) chlorid einsetzt.

4. Verfahren nach den Ansprüchen 1 bis 3, dadurch gekennzeichnet, daß man zusätzlich ein anorganisches, in Wasser unlösliches Pulver mitverwendet.

5. Verfahren nach den Ansprüchen 1 bis 4, dadurch gekennzeichnet, daß man als wasserunlösliches, anorganisches Pulver Tricalciumphosphat verwendet.

6. Verfahren nach den Ansprüchen 1 bis 3, dadurch gekennzeichnet, daß man in der wäßrigen Phase zunächst mit Hilfe von Komplexbildnern die störenden Fremdionen entfernt und dann die wasserlöslichen anorganischen Metallsalze in der gewünschten Konzentration an Metallionen zusetzt.

7. Verfahren nach den Ansprüchen 4 und 5, dadurch gekennzeichnet, daß man in der wäßrigen Phase zunächst mit Hilfe von Komplexbildnern die störenden Fremdionen entfernt und dann die wasserlöslichen anorganischen Metallsalze in der gewünschten Konzentration an Metallionen zusetzt.

8. Verfahren nach einem der Ansprüche 1 bis 7, dadurch gekennzeichnet, daß man, bezogen auf wie wäßrige Phase, weniger als 0,5 Gewichtsprozent eines Komplexbildners zusetzt.

9. Verfahren nach den Ansprüchen 1 bis 8, dadurch gekennzeichnet, daß an sich bekannte flammhemmende Verbindungen mitverwendet werden.

10. Verwendung der nach den Ansprüchen 1 bis 9 erhaltenen expandierbaren Styrolpolymerisate zur Herstellung von Schaumstoffformkörpern.

**Claims**

1. A process for controlling the bead size in the production of expandable styrene polymers by polymerisation of styrene or in a mixture with comonomers in aqueous suspension in the presence of organic protective colloids, free radical-forming initiators and blowing agents, characterised in that a concentration of calcium ions or aluminium ions or ions of the metals of sub-groups I or II or VI to VIII of the Periodic Table of the elements from $1 \times 10^{-5}$ to $3 \times 10^{-2}$ per cent by weight is set up, relative to the aqueous phase, the metal ions being present in water-soluble, inorganic salts as cations in the higher oxidation states.

2. A process according to claim 1, characterised in that the concentration of the metal ions is $1 \times 10^{-4}$ to $1 \times 10^{-2}$ per cent by weight, relative to the aqueous phase.

3. A process according to either of claims 1 and 2, characterised in that iron(III) chloride is introduced as the water-soluble, inorganic metal salt.

4. A process according to any of claims 1 to 3, characterised in that an inorganic, water-insoluble powder is additionally used concomitantly.

5. A process according to any of claims 1 to 4, characterised in that tricalcium phosphate is used as the water-insoluble, inorganic powder.

6. A process according to any of claims 1 to 3, characterised in that the interfering foreign ions in the aqueous phase are initially removed with the aid of complexing agents, and the water-soluble inorganic metal salts are then added in the desired concentration of metal ions.

7. A process according to either of claims 4 and 5, characterised in that the interfering foreign ions in the aqueous phase are initially removed with the aid of complexing agents, and the water-soluble, inorganic metal salts are then added in the desired concentration of metal ions.

8. A process according to any of claims 1 to 7, characterised in that less than 0.5 per cent by weight, relative to the aqueous phase, of a complexing agent is added.

9. A process according to any of claims 1 to 8, characterised in that flame retardant compounds which are known per se are used concomitantly.

10. The use of expandable styrene polymers obtained according to any of claims 1 to 9 for the production of foam mouldings.

**Revendications**

1. Procédé pour régler la taille des perles lors de la préparation de produits expansibles de polymérisation du styrène, par polymérisation de styrène ou en mélange avec des comomères en suspension aqueuse, en présence de colloïdes protecteurs et d'initiateurs formant des radicaux, ainsi que d'agents gonflants, caractérisé par le fait que, relativement à la phase aqueuse, on ajuste une concentration en ions calcium ou aluminium, ou en ions des métaux du sous-groupe I ou II ou VI à VIII du système périodique des éléments, de $1.10^{-5}$ à $3.10^{-2}$ % en masse, les ions métalliques dans les sels minéraux solubles dans l'eau se présentant sous forme de cations dans le degré d'oxydation le plus élevé.

2. Procédé selon la revendication 1, caractérisé en ce que la concentration des ions métalliques, relativement à la phase aqueuse, est de $1.10^{-4}$ à $1.10^{-2}$ % en masse.

3. Procédé selon les revendications 1 et 2, caractérisé par le fait que l'on utilise, comme sel métallique minéral soluble dans l'eau, le chlorure de fer-(III).

4. Procédé selon les revendications 1 à 3, caractérisé par le fait que l'on utilise conjointement en plus une poudre minérale insoluble dans l'eau.

5. Procédé selon les revendications 1 à 4, caractérisé par le fait que l'on utilise, comme poudre minérale insoluble dans l'eau, le phosphate tricalcique.

6. Procédé selon les revendications 1 à 3, caractérisé par le fait que l'on élimine d'abord dans la phase aqueuse les ions étrangers gênants à l'aide de formateurs de complexes et qu'on ajoute ensuite, avec la concentration désirée en ions métalliques, les sels métalliques minéraux solubles dans l'eau.

7. Procédé selon les revendications 4 et 5, caractérisé par le fait que l'on élimine d'abord dans la phase aqueuse les ions étrangers gênants à l'aide de formateurs complexes et que l'on ajoute ensuite, avec la concentration désirée en ions métalliques, les sels métalliques minéraux solubles dans l'eau.

8. Procédé selon l'une des revendications 1 à 7, caractérisé par le fait que l'on ajoute, relativement à la phase aqueuse, moins de 0,5 % en poids d'un formateur de complexe.

9. Procédé selon les revendications 1 à 8, caractérisé par le fait que l'on utilise conjointement des composés ignifugeants connus en eux-mêmes.

10. L'utilisation, pour la fabrication de corps moulés en substance-mousse, des produits expansibles de polymérisation du styrène qui sont obtenus selon les revendications 1 à 9.